(19) Europäisches Patentamt
European Patent Office
Office européen des brevets

(11) EP 3 227 386 B1

(12) EUROPÄISCHE PATENTSCHRIFT

(45) Veröffentlichungstag und Bekanntmachung des Hinweises auf die Patenterteilung:
**15.07.2020 Patentblatt 2020/29**

(21) Anmeldenummer: **15804419.8**

(22) Anmeldetag: **02.12.2015**

(51) Int Cl.:
***C08L 69/00*** *(2006.01)*

(86) Internationale Anmeldenummer:
**PCT/EP2015/078268**

(87) Internationale Veröffentlichungsnummer:
**WO 2016/087477 (09.06.2016 Gazette 2016/23)**

(54) **POLYETHYLENWACHS-HALTIGE POLYCARBONAT-ZUSAMMENSETZUNGEN**

POLYCARBONATE COMPOSITIONS CONTAINING POLYETHYLENE WAX

COMPOSITIONS DE POLYCARBONATE CONTENANT DE LA CIRE DE POLYÉTHYLÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2014 EP 14196206**

(43) Veröffentlichungstag der Anmeldung:
**11.10.2017 Patentblatt 2017/41**

(73) Patentinhaber: **Covestro Deutschland AG
51373 Leverkusen (DE)**

(72) Erfinder:
- **WEHRMANN, Rolf
47800 Krefeld (DE)**
- **HEUER, Helmut, Werner
51371 Leverkusen (DE)**
- **BOUMANS, Anke
47574 Goch (DE)**
- **ERKELENZ, Michael
47239 Duisburg (DE)**

(74) Vertreter: **Levpat
c/o Covestro AG
Gebäude 4825
51365 Leverkusen (DE)**

(56) Entgegenhaltungen:
**EP-A1- 0 262 566 EP-A1- 0 433 723
EP-A2- 1 925 638**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 227 386 B1

## Beschreibung

Die Erfindung betrifft Polycarbonat-Zusammensetzungen mit verbesserten thermischen Eigenschaften (Vicat-Temperaturen) und verbessertem Verarbeitungsverhalten, deren Herstellung sowie deren Verwendung zur Herstellung von Zusammensetzungen, z. B. Blends, und daraus erhältliche Formteile.

Polycarbonate gehören zur Gruppe der technischen Thermoplaste. Sie finden vielseitig Anwendung im Elektro- und Elektronikbereich (E/E-Bereich), als Gehäusewerkstoff von Leuchten und bei Anwendungen, bei denen besondere mechanische Eigenschaften gefordert sind. Ein weiteres großes Einsatzgebiet sind optische Datenspeicher wie die verschiedenen CD- und DVD-Formate sowie Blu-ray Disc und HD-DVD, sowie Extrusionsanwendungen wie Polycarbonatplatten, Diffuser-Sheets für Hintergrundbeleuchtungen, LED-Anwendungen und andere Displayanwendungen oder Wasserflaschen, aber auch optische Anwendungen im Automobilbereich, wie Verscheibungen, Kunststoffabdeckungen, Streuscheiben oder Lichtleiterelemente, Kollimatoren, Linsen, polymere Lichtwellenleiter sowie Lampenabdeckungen für Langfeldleuchten.

Bei den thermischen Eigenschaften von Polycarbonat-Zusammensetzungen sind insbesondere die Wärmeformbeständigkeitstemperatur HDT (Heat Distortion Temperature), die Kugeleindrucktemperatur KET und die Vicat-Erweichungstemperatur VST (Vicat Softening Temperature) relevant.

Neuerdings werden an Gehäusematerialien für E/E-Anwendungen, z. B. Smart Meter, erhöhte Anforderungen gestellt, insbesondere nach einer verbesserten Wärmeformbeständigkeit HDT-A oder HDT-B. Gleichzeitig werden andere Eigenschaften gefordert wie UV-Stabilität, gutes Entformungsverhalten oder flammwidrige Eigenschaften, die jeweils durch die Verwendung spezieller Additive eingestellt werden müssen. Diese Additive führen jedoch gerade zu einer Verschlechterung der thermischen Eigenschaften, da sie als interne Weichmacher wirken, die die Glastemperaturen herabsetzen.

Neben den thermischen Eigenschaften müssen die Polycarbonat-Zusammensetzungen auch über ein gutes Verarbeitungsverhalten im Spritzguss verfügen. Dieses betrifft besonders das Entformungsverhalten von komplexen dreidimensionalen Bauteilen.

Aus der EP 1 925 638 A2 ist die Verwendung eines synthetischen Wachsoxidats mit einem zahlenmittleren Molekulargewicht von 300 bis 1000 g/mol sowie einer Säurezahl im Bereich von 15 bis 60 mg KOH/G als Verarbeitungshilfsmittel in polaren transparenten Polymeren beschrieben. Hier wird jedoch der Einfluss des Zusatzes dieses Verarbeitungshilfsmittels auf die Transparenz des Polymers untersucht. Thermische Eigenschaften wie Vicat-Temperaturen oder KET werden nicht angesprochen. Auch wird der Einfluss der Verarbeitungshilfsmittel in opaken Zusammensetzungen nicht erwähnt. Aus der EP 0 262 566 A1 ist die Verwendung von oxidiertem Polyethylen mit einem zahlenmittleren Molekulargewicht von 7000 bis 15000 g/mol als Entformungsmittel in estergruppenfreien, thermoplastischen, aromatischen Polycarbonaten bekannt. In der EP 0433 723 A1 wird der Zusatz von oxidierten Polyethylenen mit einem zahlenmittleren Molekulargewicht von 3000 bis 5000 g/mol zu aromatischen Polycarbonatharzen mit Styrol-Acrylonitril Copolmeren oder Acrylonitril und Styrol gepropften Polybutadienen beschrieben. Aus der Molmasse der Polyethylene des Stands der Technik lässt sich jedoch nicht auf ihre Säurezahl oder Kristallinität schließen.

Es bestand daher die Aufgabe, aromatische Polycarbonat-Zusammensetzungen mit verbesserten thermischen Eigenschaften und verbessertem Entformungsverhalten, repräsentiert durch eine reduzierte Gleit- und Haftreibung, unter Erhalt der sonstigen Kerneigenschaften zu entwickeln. Insbesondere bestand die Aufgabe der vorliegenden Erfindung darin, gefüllte Polycarbonat-Zusammensetzungen mit einer guten Wärmeformbeständigkeit in Form einer hohen Kugeldruckprüfungstemperatur oder Vicat Erweichungstemperatur bereitzustellen, welche den Anforderungen der Elektroindustrie gerecht wird und gleichzeitig ein gutes Entformungsverhalten aufweist.

Überraschenderweise wurde gefunden, dass der Zusatz von oxidierten säuremodifizierten Polyethylenwachsen, wobei das oxidierte säuremodifizierte Polyethylenwachs eine Säurezahl, bestimmt mittels JIS K0070, von < 10 mg KOH/g, eine Kristallinität von größer 60% und kleiner 90%, eine Schmelztemperatur zwischen 90 und 130°C und ein Viskositätsmittel der Molmasse, bestimmt mittels Viskosimetrie, zwischen 1500 g/mol und 5000 g/mol aufweist, zu verbesserten thermischen Eigenschaften bei Polycarbonat-Zusammensetzungen führt, gleichzeitig die Haft- und Gleitreibung reduziert und damit das Entformungsverhalten im Spritzgussprozess verbessert wird. Dabei werden KETs erhalten, welche den Anforderungen der Elektroindustrie genügen. Die erfindungsgemäßen Polycarbonat-Zusammensetzungen verfügen zudem über eine reduzierte Staubanziehung. Zusätzlich wurde gefunden, dass die erfindungsgemäßen Zusammensetzungen zusätzlich zur den verbesserten terhmischen Eigenschaften gleichzeitig auch eine verbesserte Schmelzestabilität (ausgedrückt durch Delta MVR/IMVR20') aufweisen.

Gegenstand der vorliegenden Erfindung sind daher Polycarbonat-Zusammensetzungen, enthaltend

A) Polycarbonat,

B) oxidierte säuremodifizierte Polyethylenwachse, wobei auch Mischungen verschiedener oxidierter säuremodifizierter Polyethylenwachse eingesetzt werden können,

C) optional ein oder mehrere weitere Additive und

D) einen anorganischen Füllstoff,

wobei die oxidierten säuremodifizierten Polyethylenwachse jeweils eine Säurezahl, bestimmt mittels JIS K0070, von < 10 mg KOH/g, eine Kristallinität von größer 60% und kleiner 90%, eine Schmelztemperatur zwischen 90 und 130°C und ein Viskositätsmittel der Molmasse, mittels Viskosimetrie, zwischen 1500 g/mol und 5000 g/mol aufweisen.

Komponente A

Unter thermoplastischen, aromatischen Polycarbonaten oder auch nur Polycarbonaten werden erfindungsgemäß sowohl Homopolycarbonate als auch Copolycarbonate, einschließlich Polyestercarbonaten, verstanden, wobei die Polycarbonate in bekannter Weise linear oder verzweigt sein können.

Die Herstellung der in den erfindungsgemäßen Zusammensetzungen enthaltenen Polycarbonate erfolgt prinzipiell in bekannter Weise aus Diphenolen, Kohlensäurederivaten und gegebenenfalls Verzweigern.

Allgemein ist das Verfahren zur Polycarbonatsynthese bekannt und in zahlreichen Publikationen beschrieben. EP-A 0 517 044, WO 2006/072344 Alund EP-A 1 609 818 und dort zitierte Dokumente beschreiben beispielsweise das Phasengrenzflächen- und das Schmelzeverfahren zur Herstellung von Polycarbonat.

Für die Herstellung von Polycarbonaten geeignete Dihydroxyarylverbindungen sind solche der Formel (1)

HO-Z-OH (1),

in welcher

Z ein aromatischer Rest mit 6 bis 30 C-Atomen ist, der einen oder mehrere aromatische Kerne enthält, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2)

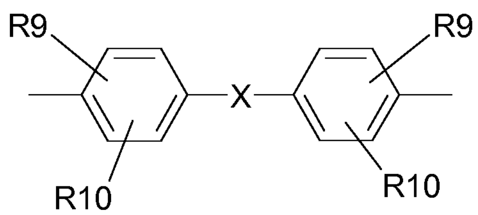

(2),

in der

$R^9$ und $R^{10}$ unabhängig voneinander für H, $C_1$- bis $c_{18}$-Alk-yl-, $C_1$- bis $C_{18}$-Alkoxy, Halogen wie Cl oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis $C_5$-Alkylen oder für $C_6$- bis $C_{12}$-Arylen, welches gegebenenfalls mit weitere Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_{12}$-Cycloalkyliden, -O-, -SO-, -CO-, -S-, $-SO_2-$. Besonders bevorzugt steht X für eine Einfachbindung, Isopropyliden, $C_5$- bis $C_{12}$-Cycloalkyliden oder Sauerstoff.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)-propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 1,1-Bis-(4-hydroxyphenyl)-3,3,5-trimethylcyclohexan.

Besonders bevorzugte Diphenole sind 2,2-Bis-(4-hydroxyphenyl)-propan (BPA), 4,4'-Dihydroxydiphenyl (DOD) und 2,2-Bis-(3-methyl-4-hydroxyphenyl)-propan, 1,1-Bis-(4-hydroxyphenyl)-3,3,5-trimethylcyclohexan (TMC).

Diese und weitere geeignete Diphenole sind z.B. in US 2 999 835 A, US 3 148 172 A, US 2 991 273 A, US 3 271 367 A, US 4 982 014 A und US 2 999 846 A, in den deutschen Offenlegungsschriften 1 570 703, 2 063 050, 2 036 052, 2 211 956 und 3 832 396, der französischen Patentschrift 1 561 518, in der Monographie H. Schnell, "Chemistry and Physics of Polycarbonates", Interscience Publishers, New York 1964, S. 28ff; S.102ff., und in D.G. Legrand, J.T. Bendler, "Handbook of Polycarbonate Science and Technology", Marcel Dekker New York 2000, S. 72ff. beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die erfindungsgemäß verwendeten thermoplastischen Polycarbonate haben üblicherweise Molmassen $M_w$ (Gewichtsmittel $M_w$, ermittelt durch Gelpermeationschromatographie-Messung (GPC), Polycarbonatkalibrierung) von 10.000 bis 200.000 g/mol, vorzugsweise von 15.000 bis 100.000 g/mol und besonders bevorzugt von 17.000 - 70.000 g/mol.

In den erfindungsgemäßen Zusammensetzungen sind bevorzugt 20,0 bis 99,8 Gew.-%, weiter bevorzugt 89,1 bis 99,8 Gew.-%, noch weiter bevorzugt 90,0 bis 99,0 Gew.-%, ganz besonders bevorzugt 94,0 bis 98,0 Gew.-% Polycarbonat enthalten.

In einer bevorzugten Ausführungsform handelt es sich bei dem erfindungsgemäß eingesetzten Polycarbonat nicht um ein Copolycarbonat enthaltend Monomereinheiten ausgewählt aus der Gruppe bestehend aus den Struktureinheiten der allgemeinen Formeln (1a), (1b), (1c) und (1d)

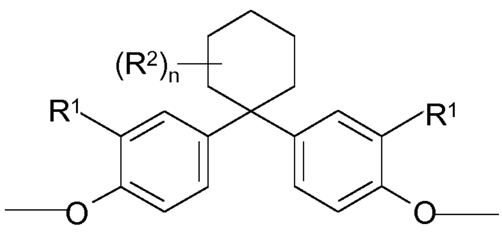

(1a)

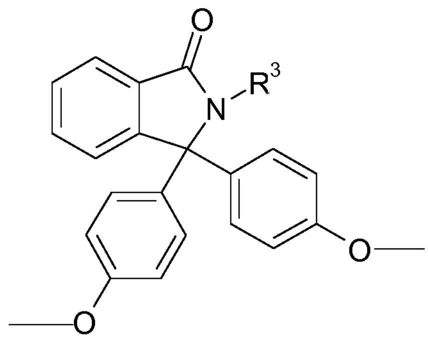

(1b)

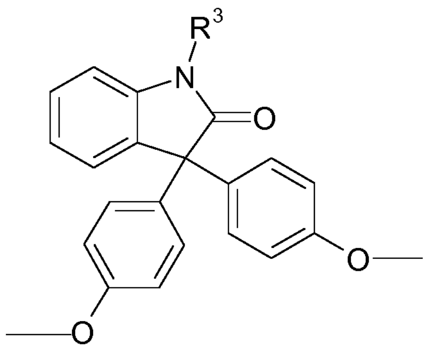

(1c)

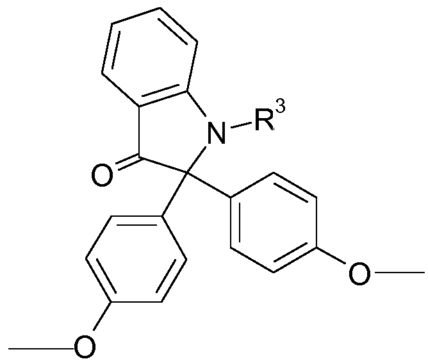

(1d)

in denen

$R^1$ für Wasserstoff oder $C_1$-$C_4$-Alkyl,

$R^2$ für $C_1$-$C_4$-Alkyl,

n für 0, 1, 2 oder 3, und

$R^3$ für $C_1$-$C_4$-Alkyl, Aralkyl oder Aryl steht,

oder deren Blends.

Komponente B

Die verwendeten speziellen oxidierten säuremodifizierten Polyethylenwachse verfügen über einen Oxidationsindex (OI) von größer 8, wobei der Oxidationsindex OI IR-spektroskopisch ermittelt wird. Die Bestimmung erfolgt, indem die Fläche des Peaks zwischen 1750 $cm^{-1}$ und 1680 $cm^{-1}$ (Carbonyl, Fläche C=O) zu der Fläche des Peaks zwischen 1400 $cm^{-1}$ und 1330 $cm^{-1}$ (Aliphaten-$CH_x$, Fläche Aliphat) ins Verhältnis gesetzt wird. Die Berechnung erfolgt gemäß:

$$OI = \text{Fläche C=O} / \text{Fläche Aliphat} * 100.$$

Die Bestimmung kann mit einem handelsüblichen FT-IR-Spekrometer, z. B. Nicolet 5700 oder FT-IR-Gerät 20DX von Thermo Fisher Scientific, erfolgen. Bevorzugt verfügen die verwendeten speziellen oxidierten säuremodifizierten Polyethylenwachse über einen Oxidationsindex (OI) von größer 8 und kleiner 450, besonders bevorzugt größer 8 und kleiner 350, ganz besonders bevorzugt größer 8 und kleiner 100, ebenso bevorzugt größer 8 und kleiner 50.

Bei den verwendeten speziellen oxidierten säuremodifizierten Polyethylenwachsen, kurz: "PE-Wachse", handelt es sich um solche PE-Wachse, welche üblicherweise durch Direktpolymerisation von Ethylen nach dem Ziegler-Verfahren hergestellt werden. In einem nachfolgenden Reaktionsschritt erfolgt eine Luftoxidation, welche zu modifizierten Typen führt. Diese speziellen oxidierten Typen weisen einen Gehalt an Säuremodifikationen auf. Die Polyethylenwachse werden insbesondere von der Firma Mitsui unter der Marke "Hi-WAX", säuremodifizierte Typen, angeboten. Die Säurezahlen liegen bei < 10 mg KOH/g (Testmethode JIS K0070). Bevorzugt liegen diese Säurezahlen bei > 0 bis < 10 mg KOH/g, besonders bevorzugt zwischen 0,5 und 9,0 mg KOH/g, ganz besonders bevorzugt zwischen 0,5 und 8,0 mg KOH/g, ebenso bevorzugt zwischen 0,75 und 7,00 mg KOH/g und insbesondere bevorzugt zwischen 0,75 und 5,00 mg KOH/g. Die Molekulargewichte ($M_\eta$) dieser oxidierten säuremodifizierten Polyethylenwachse liegen zwischen 1500 g/mol bis 5000 g/mol, besonders bevorzugt zwischen 2000 g/mol bis 4750 g/mol und ganz besonders bevorzugt zwischen 3000 bis 4500 g/mol. Die Molmasse wird bevorzugt über die Methode der Viskometrie bestimmt. Sie weisen außerdem eine Kristallinität von größer 60 % und kleiner 90 % auf. Besonders bevorzugt ist die Kristallinität größer als 65 % und kleiner als 85 %, ganz besonders bevorzugt größer als 70 % und kleiner als 85 %. Ihre Schmelzpunkte liegen im Bereich größer 90 °C und kleiner 130 °C. Die bei 140 °C gemessenen Schmelzeviskositäten, bestimmt nach ISO 11443, liegen zwischen 70 mPas·s und 800 mPa·s.

Die oxidierten säuremodifizierten Polyethylenwachse werden vorzugsweise in situ in einem kontinuierlichen oder batch-weisen Polycarbonatherstellprozess über ein Seitenaggregat direkt oder in Form eines Masterbatches oder in einem Compoundierprozess direkt oder in Form eines Masterbatches über ein Seitenaggregat, vorzugsweise unter Luftausschluss, der Polycarbonatschmelze zugeführt.

Die oxidierten säuremodifizierten Polyethylenwachse werden in Mengen von 0,05 bis 10,0 Gew.-%, bevorzugt 0,08 bis 6,0 Gew.-%, weiter bevorzugt 0,10 bis 5,0 Gew.-%, noch weiter bevorzugt 0,15 bis 4,5 Gew.-% besonders bevorzugt von 0,15 bis 4,0 Gew.-%, ganz besonders bevorzugt 0,2 bis 0,5 Gew.-%, bezogen auf die Gesamtzusammensetzung, eingesetzt.

Komponente C

Der Zusatz von Additiven dient z.B. der Verlängerung der Nutzungsdauer im Fall von Stabilisatoren, die einen Abbau der Zusammensetzungsbestandteile verhindern, der Farbgebung des Endprodukts, der Vereinfachung der Verarbeitung - z.B. im Fall von Entformungsmitteln, Fließhilfsmitteln, Antistatika - oder der Anpassung der Polymereigenschaften an bestimmte Belastungen, beispielsweise durch Schlagzähmodifikatoren wie Kautschuke, Flammschutzmittel, und/oder Farbmittel.

Diese Additive können einzeln, in beliebigen Mischungen oder mehreren verschiedenen Mischungen der Polymerschmelze zugesetzt werden, und zwar direkt bei der Isolierung des Polymers über einen Seitenextruder vor der Granulierung oder aber nach Aufschmelzung von Granulat in einem sogenannten Compoundierungsschritt. Dabei können die Additive beziehungsweise deren Mischungen als Feststoff, insbesondere als Pulver, oder als Schmelze der Polymerschmelze zugesetzt werden. Eine andere Art der Dosierung ist die Verwendung von Masterbatches oder Mischungen von Masterbatches der Additive oder Additivmischungen.

Geeignete übliche Additive für Polycarbonatzusammensetzungen sind beispielsweise beschrieben im "Additives for Plastics Handbook", John Murphy, Elsevier, Oxford 1999 oder im "Plastics Additives Handbook", Hans Zweifel, Hanser, München 2001 oder in WO 99/55772 A1, S. 15-25.

Bevorzugt ist mindestens ein Additiv aus der Gruppe der Thermostabilisatoren, Entformungsmittel und/oder UV-Stabilisatoren enthalten.

Die Mengen der Additive, ausgewählt aus der Gruppe der Thermostabilisatoren, Entformungsmittel und/oder UV-Stabilisatoren, betragen, falls vorhanden, bevorzugt 0,04 bis 4,0 Gew.-%, des Weiteren bevorzugt 0,045 bis 3,8 Gew.-% und besonders bevorzugt 0,05 bis 3,6 Gew.-%.

Als Additiv ist insbesondere bevorzugt mindestens ein Thermostabilisator enthalten.

Als Thermostabilisatoren eignen sich bevorzugt Tris-(2,4-di-tert-butylphenyl)phosphit (IRGAFOS® 168), Tetrakis(2,4-di-tert-butylphenyl)-[1,1biphenyl]-4,4'-diylbisphosphonit, Triisooctylphosphat, Octadecyl-3-(3,5-di-tert-butyl-4-hydroxyphenyl)propionat (IRGANOX® 1076 von BASF), Bis(2,4-dicumylphenyl)pentaerythritoldiphosphit (DOVERPHOS® S-9228), Bis(2,6-di-tert-butyl-4-methylphenyl)pentaerythritoldiphosphit (ADK STAB PEP-36) oder Triphenylphosphin. Sie werden allein oder als Gemisch (z. B. IRGANOX® B900 (Gemisch aus IRGAFOS® 168 und IRGANOX® 1076 im Verhältnis 4:1 von BASF) oder Bis(2,4-dicumylphenyl)pentaerythritoldiphosphit (DOVERPHOS® S-9228-PC) mit IRGANOX® B900 bzw. IRGANOX® 1076) eingesetzt. Diese Stabilisatoren werden üblicherweise in Konzentrationen von 0,002 Gew.-% bis 0, 2 Gew.-%, vorzugsweise von 0,005 Gew.-% bis 0, 15 Gew.-%, besonders bevorzugt von 0,006 Gew.-% bis 0,12 Gew.-%, jeweils bezogen auf die Gesamtzusammensetzung, eingesetzt.

Als primäre Antioxidantien kommen bevorzugt sterisch gehinderte Phenole, z. B. IRGANOX®-Typen der Fa. BASF wie IRGANOX® 1076 (Octadecyl-3-(3,5-di-tert-butyl-4-hydroxyphenyl)-propionat), IRGANOX® 1010 (Pentaerythritol-tetrakis(3-(3,5-di-tert-butyl-4-hydroxyphenyl)-propionat) oder IRGANOX® 1035 (Thiodiethylen-bis-[3-(3,5-di-tert-butyl-4-hydroxyphenyl)-propionat]) zum Einsatz.

Erfindungsgemäß bevorzugte Zusammensetzungen enthalten neben mindestens einem Thermostabilisator mindestens einen UV-Stabilisator oder ein Entformungsmittel.

Auch wenn die erfindungsgemäßen Zusammensetzungen Entformungsmittel enthalten können, sind Ausführungsformen ohne Entformungsmittel als Additiv bevorzugt. Die den erfindungsgemäßen Zusammensetzungen gegebenenfalls zugesetzten Entformungsmitttel sind bevorzugt ausgewählt aus der Gruppe, die Pentaerythrittetrastearat, Glycerinmonostearat, Stearylstearat und Propandiolstearat sowie deren Mischungen umfasst. Die Entformungsmittel werden vorzugsweise eingesetzt in Mengen von 0,05 Gew.-% bis 2,00 Gew.-%, weiter bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,2 Gew.-% bis 0,5 Gew.-%, jeweils bezogen auf die Gesamtzusammensetzung.

Als UV-Stabilisatoren werden bevorzugt organische UV-Stabilisatoren verwendet. Die UV-Stabilisatoren sind bevorzugt ausgewählt aus der Gruppe, die Benzotriazole (z. B. Tinuvine der Firma BASF), Triazine (CGX-06 der Firma BASF), Benzophenone (Uvinule der Firma BASF), Cyanacrylate (Uvinule der Firma BASF), Zimtsäureester und Oxalanilide sowie Mischungen dieser UV-Stabilisatoren umfasst.

Beispiele für geeignete UV-Absorber sind:

a) Malonester der Formel (I):

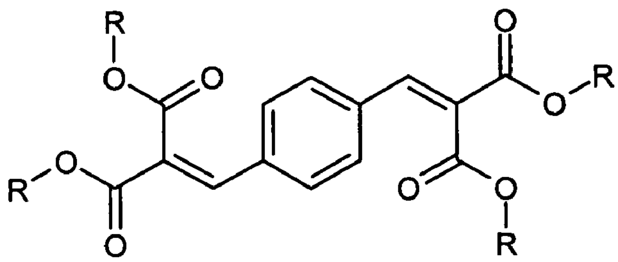

(I)

,

wobei R Alkyl bedeutet. Bevorzugt steht R für $C_1$- bis $C_6$-Alkyl, insbesondere für $C_1$- bis $C_4$-Alkyl und besonders bevorzugt für Ethyl.

b) Benzotriazol-Derivate nach Formel (II):

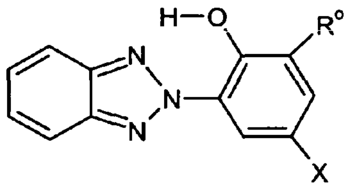

(II)

In Formel (II) sind R° und X unabhängig voneinander ausgewählt H, Alkyl oder Alkylaryl.

Bevorzugte Benzotriazol-Derivate sind Tinuvin® 329 mit X = 1,1,3,3-Tetramethylbutyl und R° = H und Tinuvin® 234 mit X und R° = 1,1-Dimethyl-1-phenyl.

c) Dimere Benzotriazol-Derivate nach Formel (III):

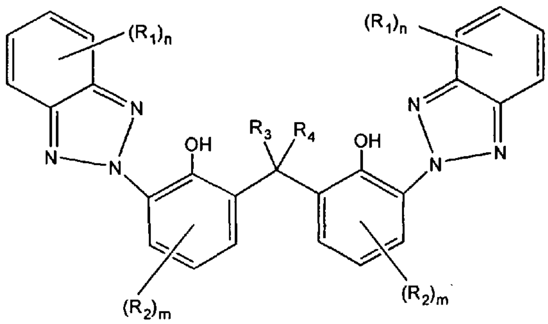

(III)

,

wobei $R_1$ und unabhängig voneinander ausgewählt sind aus H, Halogen, $C_1$- bis $C_{10}$-Alkyl, $C_5$-bis $C_{10}$-Cycloalkyl, $C_7$- bis $C_{13}$-Aralkyl, $C_6$- bis $C_{14}$-Aryl, -$OR^5$ oder -(CO)-O-$R^5$ mit $R^5$ = H oder $C_1$- bis $C_4$-Alkyl
und

$R_3$ und $R_4$ unabhängig voneinander ausgewählt sind aus H, $C_1$- bis $C_4$-Alkyl, $C_5$- bis $C_6$-Cycloalkyl, Benzyl oder $C_6$-bis $C_{14}$-Aryl, wobei Alkylgruppen bei $R_1$, $R_2$, $R_3$ und $R_4$ jeweils linear oder verzweigt sein können,
und wobei

m 1, 2 oder 3 und n 1, 2, 3 oder 4 bedeuten.

Ein bevorzugtes Benzotriazol-Derivat ist dabei Tinuvin® 360 (BASF) mit $R_1$ = $R_3$ = $R_4$ = H; n = 4; = 4-1,1,3,3-Tetramethylbutyl; m = 1 oder Tinuvin 1600 (BASF).

d) Dimere Benzotriazol-Derivate nach Formel (IV):

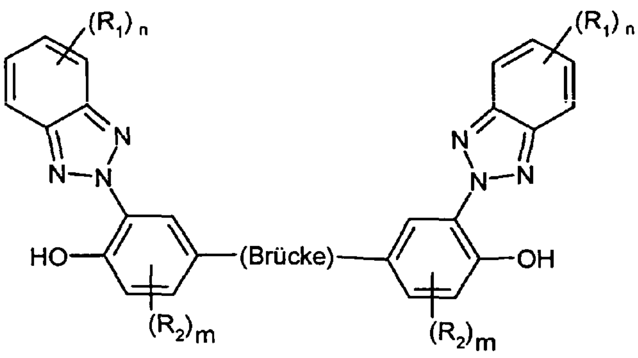

(IV)

,

worin die Brücke

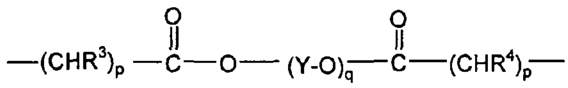

bedeutet,

$R_1$ und unabhängig voneinander ausgewählt sind aus H, Halogen, $C_1$- bis $C_{10}$-Alkyl, $C_5$- bis $C_{10}$-Cycloalkyl, $C_7$- bis $C_{13}$-Aralkyl, $C_6$- bis $C_{14}$-Aryl, $-OR_5$ oder $-(CO)-O-R_5$ mit $R_5$ = H oder $C_1$-bis $C_4$-Alkyl und

m 1, 2 oder 3 und n 1, 2, 3 oder 4 bedeuten

und worin p eine ganze Zahl von O bis 3 ist, q eine ganze Zahl von 1 bis 10 ist, Y gleich $-CH_2-$, $-(CH_2)_2-$, $-(CH_2)_3-$, $-(CH_2)_4-$, $-(CH_2)_5-$, $-(CH_2)_6-$, oder $-CH(CH_3)-CH_2-$ ist und

$R_3$ und $R_4$ unabhängig voneinander ausgewählt sind aus H, $C_1$- bis $C_4$-Alkyl, $C_5$- bis $C_6$-Cycloalkyl, Benzyl oder $C_6$- bis $C_{14}$-Aryl, wobei Alkylgruppen bei $R_1$, $R_2$, $R_3$ und $R_4$ jeweils linear oder verzweigt sein können.

Bevorzugt ist dabei Tinuvin® 840 mit $R_1$ = H; n = 4; = tert-Butyl; m = 1; ist in ortho-Stellung zur OH-Gruppe angebracht; $R_3 = R_4$ = H; p = 2; Y = $-(CH_2)_5-$; q = 1.

e) Triazin-Derivate nach Formel (V):

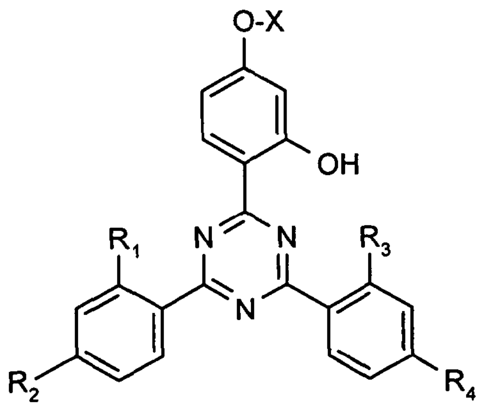

(V)

,

worin $R_1$, $R_2$, $R_3$, $R_4$ unabhängig voneinander ausgewählt sind aus H, Alkyl, Aryl, CN oder Halogen

und

X gleich lineares oder verzweigtes Alkyl, vorzugsweise iso-Octyl, ist.

Ein bevorzugtes Triazin-Derivat ist dabei Tinuvin® 1577 mit $R_1$ = = $R_3$ = $R_4$ = H; X = Hexyl sowie Cyasorb® UV-1 164 mit $R_1$ = = $R_3$ = $R_4$ = Methyl; X = Octyl.

f) Triazin-Derivate der folgenden Formel (Va):

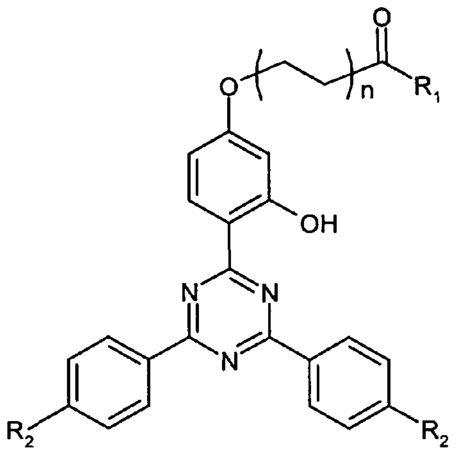

(Va)

,

worin $R_1$ gleich $C_1$-Alkyl bis $C_{17}$-Alkyl, jeweils linear oder verzweigt, bedeutet,
gleich H oder $C_1$-Alkyl bis $C_4$-Alkyl, jeweils linear oder verzweigt, bedeutet
und
n gleich 0 bis 20 ist.

g) Dimere Triazin-Derivate der Formel (VI):

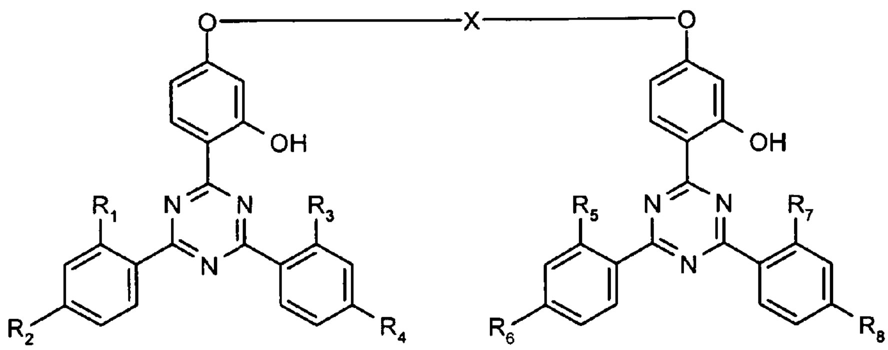

(VI)

,

worin $R_1$, $R_2$, $R_3$, $R_4$, $R_5$, $R_6$, $R_7$, $R_8$ unabhängig voneinander ausgewählt sind aus H, Alkyl - linear oder verzweigt-, CN oder Halogen
und

X gleich Alkyliden, vorzugsweise Methyliden, oder $-(CH_2-CH_2-O-)_n-C(=O)-$ ist
und

n gleich 1 bis 10, vorzugsweise 1 bis 5, insbesondere 1 bis 3 ist.

h) Diarylcyanoacrylate der Formel (VII):

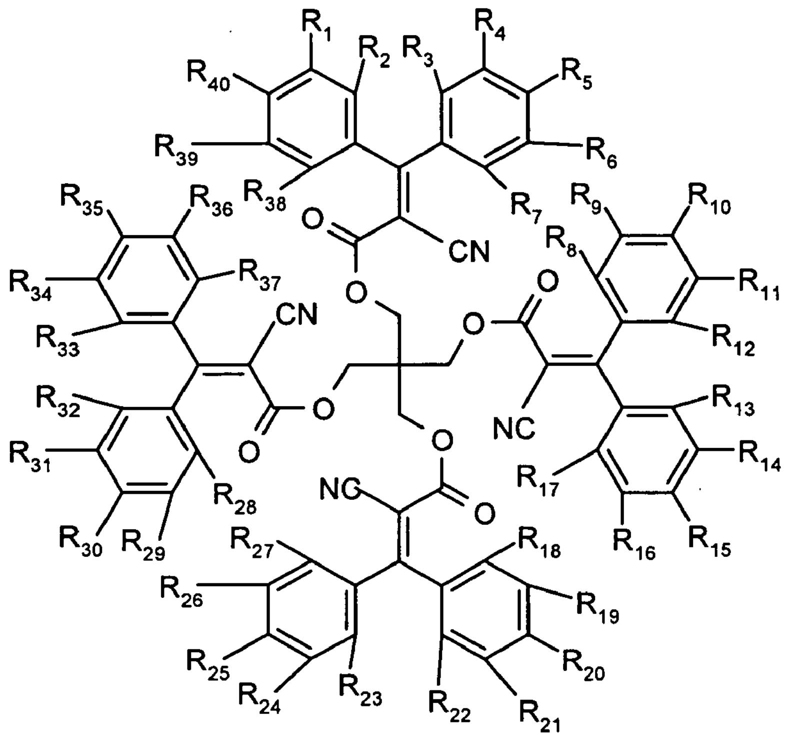

(VII)

worin $R_1$ bis $R_{40}$ unabhängig voneinander ausgewählt sind aus H, Alkyl -linear oder verzweigt -, CN oder Halogen.

Ein bevorzugtes Diarylcyanoacrylat ist dabei Uvinul® 3030 mit $R_1$ bis $R_{40}$ = H.

Besonders bevorzugte UV-Stabilisatoren für die erfindungsgemäßen Zusammensetzungen sind Verbindungen aus der Gruppe, die aus den Benzotriazolen (b), dimeren Benzotriazolen (c und d), den Malonestern (a) und den Cyanacrylaten (h), einzeln sowie Mischungen dieser Verbindungen, besteht.

Die UV-Stabilisatoren werden eingesetzt in Mengen von 0,01 Gew.-% bis 1,00 Gew.-%, bevorzugt in Mengen von 0,05 Gew.-% bis 0,80 Gew.-%, weiter bevorzugt in Mengen von 0,08 Gew.-% bis 0,5 Gew.-% , noch weiter bevorzugt in Mengen von 0,1 Gew.-% bis 0,4 Gew.-%, besonders bevorzugt in Mengen von 0,12 Gew.-% bis 0,35 Gew.-% und ganz besonders bevorzugt in Mengen von 0,12 Gew.-% bis 0,3 Gew.-%, jeweils bezogen auf die Gesamtzusammensetzung.

Sofern die Zusammensetzung als Masterbatch für UV-Absorber oder als Coextrusionsschicht verwendet wird, kann der Gehalt an UV-Absorber 3 - 20 Gew.-%, vorzugsweise 5 - 8 Gew.-%, bezogen auf die Gesamtzusammensetzung, betragen.

Bevorzugt sind auch Zusammensetzungen, enthaltend oben genannte oxidierte säuremodifizierte Polyethylenwachse und mindestens ein Additiv, ausgewählt aus der Gruppe, bestehend aus Thermostabilisatoren, Entformungsmitteln und UV-Stabilisatoren, und zusätzliche Additive wie Flammschutzmittel sowie gegebenenfalls Farbmittel, Antistatika und/oder weitere üblichen Additive wie Schlagzähmodifikatoren.

Geeignete Flammschutzmittel im Sinne der vorliegenden Erfindung sind unter anderem Alkali- bzw. Erdalkalisalze von aliphatischen bzw. aromatischen Sulfonsäure-, Sulfonamid- und Sulfonimidderivaten.

Salze, die in den erfindungsgemäßen Zusammensetzungen verwendet werden können, sind beispielsweise: Natriumperfluorbutansulfat, Kaliumperfluorbutansulfat, Natriumperfluormethansulfonat, Kaliumperfluormethansulfonat, Natriumperfluoroctansulfat, Kaliumperfluoroctansulfat, Natrium-2,5-dichlorbenzolsulfat, Kalium-2,5-dichlorbenzolsulfat, Natrium-2,4,5-trichlorbenzolsulfat, Kalium-2,4,5-trichlorbenzolsulfat, Natriummethylphosphonat, Kaliummethylphosphonat, Natrium-(2-phenyl-ethylen)-phosphonat, Kalium-(2-phenyl-ethylen)-phosphonat, Natriumpentachlorbenzoat, Kaliumpentachlorbenzoat, Natrium-2,4,6-trichlorbenzoat, Kalium-2,4,6-trichlorbenzoat, Natrium-2,4-dichlorbenzoat, Kalium-2,4-dichlorbenzoat, Lithiumphenylphosphonat, Natriumdiphenylsulfonsulfonat, Kaliumdiphenylsulfonsulfonat, Natrium-2-formylbenzolsulfonat, Kalium-2-formylbenzolsulfonat, Natrium-(N-benzolsulfonyl)-benzolsulfonamid, Kalium-(N-benzolsulfonyl)-benzolsulfonamid, Trinatriumhexafluoroaluminat, Trikaliumhexafluoroaluminat, Dinatriumhexafluorotitanat, Dikaliumhexafluorotitanat, Dinatriumhexafluorosilikat, Dikaliumhexafluorosilikat, Dinatriumhexafluorozirkonat, Dikaliumhexafluorozirkonat, Natriumpyrophosphat, Kaliumpyrophosphat, Natriummetaphosphat, Kaliummetaphosphat, Natriumtetrafluoroborat, Kaliumtetrafluoroborat, Natriumhexafluorophosphat, Kaliumhexafluorophosphat, Natrium- oder Kalium- oder Lithiumphosphat, N-(p-tolylsulfonyl-)-p-toluolsulfimid-Kaliumsalz, N-(N'-Benzylaminocarbonyl)-sulfanylimid-Kaliumsalz, Natriumnonafluor-1-butansulfonat, Kaliumnonafluor-1-butansulfonat oder deren Mischungen.

Bevorzugt werden Natriumperfluorbutansulfat, Kaliumperfluorbutansulfat, Natriumperfluoroctansulfat, Kaliumperfluoroctansulfat, Natriumdiphenylsulfonsulfonat, Kaliumdiphenylsulfonsulfonat, Natrium-2,4,6-trichlorbenzoat, Kalium-2,4,6-trichlorbenzoat, N-(p-Tolylsulfonyl-)-p-toluolsulfimid-Kaliumsalz, N-(N'-Benzylaminocarbonyl)-sulfanylimid-Kaliumsalz eingesetzt. Ganz besonders bevorzugt sind Kaliumnonafluor-1-butansulfonat oder Natriumdiphenylsulfonsulfonat oder Kaliumdiphenylsulfonsulfonat. Kaliumnonafluor-1-butansulfonat ist u.a. als Bayowet®C4 (Firma Lanxess, Leverkusen, Deutschland, CAS-Nr. 29420-49-3), RM64 (Firma Miteni, Italien) oder als 3M™ Perfluorobutansulfonylfluorid FC-51 (Firma 3M, USA) kommerziell erhältlich. Ebenfalls sind Mischungen der genannten Salze geeignet.

Die Menge an Flammschutzmittel in den erfindungsgemäßen Zusammensetzungen beträgt bevorzugt 0,001 bis 1,0 Gew.-%, weiter bevorzugt 0,05 bis 0,80 Gew.-%, noch weiter bevorzugt 0,10 bis 0,60 Gew.-%, besonders bevorzugt 0,10 bis 0,40 Gew.-%.

Werden polymere Flammschutzadditive wie z. B. PTFE oder Fluor-haltige Olefinpolymere oder Olefincopolymere verwendet, so beträgt deren Menge 0,1 bis 1,0 Gew.-%, bevorzugt 0,1 bis 0,9 Gew.-% und besonders bevorzugt 0,15 bis 0,85 Gew.-%

Es können Farbmittel, wie organische Farbstoffe oder Pigmente oder anorganische Pigmente, IR-Absorber mit Stabilisatoren, organische und/oder anorganische Streupigmente zugesetzt werden.

Komponente D

Eine weitere Komponente der erfindungsgemäßen Zusammensetzungen sind anorganische Füllstoffe.

Die anorganischen Füllstoffe, die in den erfindungsgemäßen Zusammensetzungen enthalten sind, sind beispielsweise Glasfasern, Glas(hohl)kugeln, Carbonfasern, Silica, Quarz, Mineralien, Titandioxid, Bornitrid und/oder Talk. Bevorzugt handelt es sich bei den anorganischen Füllstoffen um mindestens eine Glasfaser. Besonders bevorzugt weist diese mindestens eine Glasfaser einen Durchmesser (nom.) von 10 bis 20 $\mu$m auf. Ebenso bevorzugt beträgt die mittlere Faserlänger (nom.) 3 bis 5,5 mm. Dabei ist das verwendete Glas bevorzugt E-Glas (DIN 1259). Die Mengen an anorganischen Füllstoffen betragen bevorzugt 1 bis 45,0 Gew.-%, weiter bevorzugt 2,0 bis 40,0 Gew.-%, noch weiter bevorzugt 3,0 bis 35,0 Gew.-%, besonders bevorzugt 5,0 bis 30,0 Gew.-% und ganz besonders bevorzugt 7,5 bis 15 Gew.-% (bezogen auf die Gesamtzusammensetzung).

Die erfindungsgemäßen Polycarbonat-Zusammensetzungen können auf üblichen Maschinen, beispielsweise auf Extrudern oder Spritzgussmaschinen, zu beliebigen Formkörpern bzw. Folien, Platten oder anderen Halbzeugen wie Rohren, Profilen, Stangen oder Flaschen, in üblicher Weise verarbeitet werden.

Die Polycarbonatzusammensetzungen mit verbesserten Schmelzeeigenschaften gemäß vorliegender Erfindung werden bevorzugt zur Herstellung von Spritzgussteilen und Extrudaten (Platten, Folien und deren Laminaten, z. B. für Kartenanwendungen und Rohre) verwendet. Weiterhin bevorzugt werden die erfindungsgemäßen Polycarbonatzusammensetzungen zur Herstellung von Gegenständen für den Elektro/Elektronik-Bereich und den IT-Bereich verwendet, wie beispielsweise Gehäuseteile, Rahmen, Abdeckungen, Rückwände, Schalter, Stecker etc.

Ein weiteres großes Einsatzgebiet der erfindungsgemäßen Polycarbonatzusammensetzungen sind Displayanwendungen, aber auch optische Anwendungen im Automobilbereich, wie Kunststoffabdeckungen, Rahmen für Sonnendächer, UV-geschützte Streu- und Abdeckscheiben, sowie Lampenabdeckungen für Langfeldleuchten oder Spritzgussteile für LED-Technologien (Reflektoren, Schirme, Gehäuseteile, Kühlkörper etc.).

Die Polycarbonat-Zusammensetzungen der vorliegenden Erfindung werden insbesondere zur Herstellung von Compounds, Blends wie z. B. PC/ABS, PC/ASA, PC/SAN, PC/PBT, PC/PET oder PC/PETG und Bauteilen verwendet, die besondere Anforderungen an thermische und mechanische Eigenschaften stellen, wie beispielsweise für Gehäuse, Gegenstände im E/E-Bereich, wie Stecker, Schalter, Platten, Lampenhalterungen, -abdeckungen, Lampenfassungen, Lampenabdeckungen, Verscheibungen im Automobilbereich, Dialysatoren, Konnektoren, Hähne, Verpackungen wie Flaschen, Behälter im Medizinbereich.

Besonders bevorzugte erfindungsgemäße Zusammensetzungen bestehen aus

A) 46,0 bis 99,8 Gew.-% Polycarbonat,

B) 0,05 bis 10 Gew.-%, ganz besonders bevorzugt 0,15 bis 4,0 Gew.-% oxidiertem säuremodifiziertem Polyethylenwachs, wobei das oxidierte säuremodifizierte Polyethylenwachs eine Säurezahl, bestimmt mittels JIS K0070,

von < 10 mg KOH/g, eine Kristallinität von größer 60% und kleiner 90%, eine Schmelztemperatur zwischen 90 und 130°C und ein Viskositätsmittel der Molmasse, bestimmt mittels Viskosimetrie, zwischen 1500 g/mol und 5000 g/mol aufweist,

C1) 0,04 bis 4,0 Gew.-%, ganz besonders bevorzugt 0,05 bis 3,6 Gew.-% Additiven, ausgewählt aus der Gruppe der Thermostabilisatoren, Entformungsmittel und/oder UV-Stabilisatoren,

C2) optional weiteren Additiven, ausgewählt aus der Gruppe der Flammschutzmittel, Farbmittel, Antistatika und/oder Schlagzähmodifikatoren und

D) 0,00 bis 40,0 Gew.-%, ganz besonders bevorzugt 5,0 bis 30,0 Gew.-% anorganischen Füllstoffen.

Ganz besonders bevorzugte Zusammensetzungen bestehen aus

A) 65,0 bis 99,8 Gew.-% Polycarbonat, bevorzugt 65,0 bis 99,8 Gew.-% Polycarbonat und ganz besonders bevorzugt 75,0 bis 99,8 Gew.-% Polycarbonat,

B) 0,15 bis 4,0 Gew.-%, insbesondere 0,2 bis 0,5 Gew.-%, oxidiertem säuremodifiziertem Polyethylenwachs, wobei das oxidierte säuremodifizierte Polyethylenwachs eine Säurezahl, bestimmt mittels JIS K0070, von < 10 mg KOH/g, eine Kristallinität von größer 60% und kleiner 90%, eine Schmelztemperatur zwischen 90 und 130°C und ein Viskositätsmittel der Molmasse, bestimmt mittels Viskosimetrie, zwischen 1500 g/mol und 5000 g/mol aufweist,

C1) 0,05 bis 3,6 Gew.-% Additiven, ausgewählt aus der Gruppe der Thermostabilisatoren und/oder UV-Stabilisatoren,

C2) 0 bis 1 Gew.-% Flammschutzmittel und

D) 0 bis 30 Gew.-% Glasfasern.

In einer bevorzugten Ausführungsform weisen die erfindungsgemäßen Zusammensetzungen eine Kugeldruckprüfungstemperatur nach IEC 60335-1 von mindestens 135 °C, bevorzugt von mindestens 136 °C und besonders bevorzugt von mindestens 137 °C auf. Daher betrifft die vorliegende Erfindung in einem weiteren Aspekt die Verwendung von oxidierten säuremodifizierten Polyethylenwachsen zur Senkung der Gleit- und Haftreibungskoeffizienten und/oder Verbesserung der Kugeleindrucktemperatur von mit mindestens einem anorganischen Füllstoff gefüllten Polycarbonatzusammensetzungen. Dabei handelt es sich bei den oxidierten säuremodifizierten Polyethylenwachsen und /oder die anorganischen Füllstoffen bevorzugt um die bereits oben beschriebenen Polyethylenwachse und /oder anorganischen Füllstoffe in sämtlichen Ausgestaltungen oder Bevorzugungen.

**Beispiele**

Verwendete Rohstoffe:

PC-1: Thermostabilisiertes Bisphenol A-Polycarbonat mit einer Schmelze-Volumenfließrate MVR von 12,5 $cm^3$/10 min bei 300°C/1,2 kg, Covestro Deutschland AG (vormals Bayer MaterialScience AG, Leverkusen);

PC-2: Polycarbonat-Pulver auf Basis von Makrolon 3108 (Bisphenol A-Polycarbonat mit einer Schmelze-Volumenfließrate MVR von 6 $cm^3$/10 min bei 300°C/1,2 kg, Covestro Deutschland AG (vormals Bayer MaterialScience AG, Leverkusen));

PC-3: Thermostabilisiertes BPA-Polycarbonat mit einer Schmelze-Volumenfließrate MVR von 9,5 $cm^3$/10 min bei 300°C/1,2 kg; Covestro Deutschland AG (vormals Bayer MaterialScience AG, Leverkusen);

PC-4: Thermostabilisiertes BPA-Polycarbonat mit einer Schmelze-Volumenfließrate MVR von 6 $cm^3$/10 min bei 300°C/1,2 kg; Covestro Deutschland AG (vormals Bayer MaterialScience AG, Leverkusen);

| | |
|---|---|
| TOF: | Triisooctylphosphat, Lanxess AG, Leverkusen; |
| PETS: | Pentaerythrittetrastearat; Loxiol VPG 861, Emery Oleochemicals; |
| Tin 329: | Tinuvin 329; Hydroxybenzotriazol, UV-Absorber, BASF SE, Ludwigshafen; |
| Glasfaser: | Chopped Strands Glasfaser CS 7942, Faserdurchmesser 14 µm, Faserlänge 4,5 mm, Lanxess AG, Leverkusen; |
| PE Wachs: | Oxidiertes säuremodifiziertes Polyethylenwachs mit einem Molekulargewicht von 4000 g/mol, einer Säurezahl von 1 mg KOH/g, einem Kristallinitätsgrad von 80 % und einem Schmelzpunkt (DSC) von 121 °C sowie einer Schmelzeviskosität (bei 140 °C) von 650 mPa*s. Es wurde Hi-Wax 405MP der Firma Mitsui Chemicals Inc. verwendet. Der Oxidationsindex (bestimmt nach dem oben beschriebenen Verfahren) beträgt 9. |
| C4-Salz: | Kalium-Perfluorbutansulfonat; Lanxess AG, Leverkusen |
| Vergleichswachse: | Oxidiertes säuremodifiziertes Polyethylenwachs (I) mit einem Molekulargewicht von 2600 g/mol, einer Säurezahl von 17 mg KOH/g, einem Kristallinitätsgrad von 62 % und einem Schmelzpunkt (DSC) von 100 °C sowie einer Schmelzeviskosität (bei 140 °C) von 300 mPa*s. Es wurde Hi-Wax 4202E der Firma Mitsui Chemicals Inc. verwendet. Der Oxidationsindex (bestimmt nach dem oben beschriebenen Verfahren) beträgt 481.<br>Säuremodifiziertes Polyethylenwachs (II) mit einem Molekulargewicht von 1500 g/mol, einer Säurezahl von 60 mg KOH/g, einem Kristallinitätsgrad von 60 % und einem Schmelzpunkt (DSC) von 104 °C sowie einer Schmelzeviskosität (bei 140 °C) von 150 mPa*s. Es wurde Hi-Wax 1105A der Firma Mitsui Chemicals Inc. verwendet. Der Oxidationsindex (bestimmt nach dem oben beschriebenen Verfahren) beträgt 1057. |

Die Bestimmung der Schmelzeviskosität erfolgte in Anlehnung an ISO 11443 mit dem Gerät Visco-Robo 45.00 der Firma Göttfert.

Die Schmelze-Volumenfließrate MVR wurde nach ISO 1133 bei einer Prüftemperatur von 300°C und Belastung von 1,2 kg mit dem Gerät Zwick 4106 der Firma Zwick Roell bestimmt. Dabei steht die Abkürzung MVR für die Anfangs-Schmelze-Volumenfließrate (nach 5 Minuten Vorwärmzeit) und die Abkürzung IMVR20' für die Schmelze-Volumenfließrate nach 20 min.

Die Vicat-Erweichungstemperatur VST/B50 als Maß für die Wärmeformbeständigkeit wurde gemäß ISO 306 an Prüfkörpern der Abmessung (80 x 10 x 4) mm mit einer Stempellast von 50 N und einer Aufheizgeschwindigkeit von 50°C/h mit dem Gerät Coesfeld Eco 2920 der Firma Coesfeld Materialtest bestimmt.

Die Heat Deflection Temperature (HDT) als Maß für die Formbeständigkeitstemperatur wurde gemäß DIN EN ISO 75 an Prüfkörpern der Abmessung (80 x 10 x 4) mm mit einer Last von 1,8 MPa (HDT A) oder 0,4 5MPa (HDT B) mit dem Gerät HDT Vollautomat der Firma Coesfeld gemessen.

Die Messung der Wärmesicherheit (Kugeldruckprüfung, KET) wurde gemäß IEC 60335-1 an Probekörpern der Abmessung (127 x 12,7 x 3) mm gemessen.

Die Reibungskoeffizienten wurden unter Verwendung einer modifizierten Spritzgießmaschine vom Typ Arburg-370S-800-150 bestimmt. Das Verfahren ist beschrieben in EP 1 377 812 B1. Als interner Standard werden die Vergleichsbeispiele 1 bis 3 und 6 bis 7 herangezogen.

Das Brandverhalten wurde nach UL94 V an Stäben der Abmessung (127 x 12,7 x 1,5) mm gemessen.

**Tabelle 1: Durchgeführte Versuche 1 bis 9**

| **Rezeptur:** | | **1** (Vgl.) | **2** (Vgl.) | **3** (Vgl.) | **4** (Vgl.) | **5** (Vgl.) | **6** (Vgl.) | **7** (Vgl.) | **8** (Vgl.) | **9** (Vgl.) |
|---|---|---|---|---|---|---|---|---|---|---|
| PC-1 | Gew.-% | 85,0 | 85,0 | 85,0 | 85,0 | 85,0 | 85,0 | 85,0 | 85,0 | 85,0 |
| PC-2 | Gew.-% | 15,0 | 14,8 | 14,6 | 14,8 | 14,6 | 14,8 | 14,6 | 14,8 | 14,6 |
| PETS | Gew.-% | - | 0,2 | 0,4 | - | - | - | - | - | - |
| oxid. säuremod. PE-Wachs | Gew.-% | - | - | - | 0,2 | 0,4 | - | - | - | - |
| Vergleichswachs (I) | Gew.-% | - | - | - | - | - | 0,2 | 0,4 | - | - |
| Vergleichswachs (II) | Gew.-% | - | - | - | - | - | - | - | 0,2 | 0,4 |
| **Prüfungen:** | | | | | | | | | | |
| MVR | $cm^3$/10 min | 9,7 | 9,8 | 10,1 | 9,6 | 9,9 | 11,3 | 12,1 | 11,4 | 11,3 |
| IMVR20' | $cm^3$/10 min | 9,6 | 9,9 | 10,4 | 9,7 | 9,8 | 11,3 | 12,8 | 11,9 | 11,9 |
| Delta MVR/IMVR20' | | -0,1 | 0,1 | 0,3 | 0,1 | -0,1 | 0,0 | 0,7 | 0,5 | 0,6 |
| Vicat VST/B/50 | °C | 146,8 | 145,6 | 144,0 | 146,3 | 145,5 | 145,9 | 145,4 | 145,5 | 145,2 |
| **Reibungskoeffizienten** | | | | | | | | | | |
| Haftreibung | | 0,60 | 0,35 | 0,32 | 0,25 | 0,23 | | | | |
| Gleitreibung | | 0,51 | 0,33 | 0,30 | 0,23 | 0,21 | | | | |

Die Beispiele 1 bis 9 sind Vergleichsbeispiele. Man erkennt, dass die Polycarbonatzusammensetzungen der Beispiele 4 und 5 mit dem oxidierten säuremodifizierten Polyethylenwachs höhere Vicat-Temperaturen besitzen als Zusammensetzungen mit der gleichen Menge des herkömmlichen Entformungsmittels PETS oder mit Vergleichswachsen mit höheren Säurezahlen und gleichzeitig reduzierte Haft- und Gleitreibungskoeffizienten aufweisen. Die Zusammensetzungen 4 und 5 verfügen entsprechend über verbesserte thermische Eigenschaften und lassen sich gleichzeitig aufgrund der geringen Reibung besser verarbeiten.

Weiterhin zeichnen sich die Beispiele 4 und 5 dadurch aus, dass aus den Polycarbonat-Zusammensetzungen hergestellte Prüfkörper (Platten (155 x 75 x 2,3) mm) in einer Staubatmosphäre (Kohlenstaub) deutlich weniger Staub anziehen. Dies ist von Vorteil bei Spritzgussteilen im Gebrauch.

**Tabelle 2: Durchgeführte Versuche 10 bis 17**

| **Rohstoffe** | | **10** (Vgl.) | **11** (Vgl.) | **12** | **13** | **14** (Vgl.) | **15** (Vgl.) | **16** (Vgl.) | **17** (Vgl.) |
|---|---|---|---|---|---|---|---|---|---|
| PC-3 | Gew.-% | 79,1 | 79,09 | 79,19 | 79,09 | 79,19 | 79,09 | 79,19 | 79,09 |
| PC-4 | Gew.-% | 10,0 | 10,0 | 10,0 | 10,0 | 10,0 | 10,0 | 10,0 | 10,0 |
| | | | | | | | | | |
| GF CS 7942 | Gew.-% | 10,0 | 10,0 | 10,0 | 10,0 | 10,0 | 10,0 | 10,0 | 10,0 |
| PETS | Gew.-% | 0,45 | 0,45 | - | - | - | - | - | - |
| oxid. säuremod. PE-Wachs | Gew.-% | - | - | 0,35 | 0,45 | - | - | - | - |
| TIN 329 | Gew.-% | 0,25 | 0,25 | 0,25 | 0,25 | 0,25 | 0,25 | 0,25 | 0,25 |
| C4-Salz | Gew.-% | 0,20 | 0,20 | 0,20 | 0,20 | 0,20 | 0,20 | 0,20 | 0,20 |
| TOF | Gew.-% | - | 0,01 | 0,01 | 0,01 | 0,01 | 0,01 | 0,01 | 0,01 |
| Vergleichswachs (I) | Gew.-% | - | - | - | - | 0,35 | 0,45 | - | - |
| Vergleichswachs (II) | - | - | - | - | - | - | - | 0,35 | 0,45 |
| **Prüfungen:** | | | | | | | | | |
| MVR | ml/10 min | 10,0 | 6,4 | 6,3 | 6,0 | 7,2 | 7,5 | 6,5 | 6,5 |
| IMVR20’ | ml/10 min | 11,8 | 7,2 | 7,1 | 6,9 | 8,5 | 8,5 | 7,2 | 7,2 |
| Delta MVR/IMVR20’ | | 1,8 | 0,8 | 0,8 | 0,9 | 1,3 | 1,0 | 0,7 | 0,7 |
| Vicat VST/B/50 | °C | 144,5 | 144,7 | 147,1 | 147,2 | 145,6 | 144,6 | 143,1 | 142,7 |
| HDT A | °C | 134,7 | 135,2 | 138,3 | 137,8 | 136,6 | 137,1 | 133,1 | 131,9 |
| HDT B | °C | 141,7 | 141,6 | 144,8 | 144,9 | 143,3 | 143,5 | 141,4 | 140,6 |
| KET | °C | 136 | 135 | 138 | 138 | 136 | 136 | 136 | 135 |
| **Mechanik** | | | | | | | | | |
| Schlagzähigkeit ISO180/1U | $kJ/m^2$ | 58 spröde | 50 spröde | 41 spröde | 42 spröde | - | - | | |
| UL94V (1,5 mm) | | | | | | | | | |

(fortgesetzt)

| | | | | | | | | | |
|---|---|---|---|---|---|---|---|---|---|
| **Mechanik** | | | | | | | | | |
| Gesamtbewertung | s | V2 | V0 | V1 | V0 | - | - | | |
| **Reibungskoeffizient** | | | | | | | | | |
| Haftreibung | | 0,30 | 0,25 | 0,18 | 0,19 | - | - | | |
| Gleitreibung | | 0,28 | 0,23 | 0,17 | 0,18 | - | - | | |

Die Beispiele 10 und 11 und 14 und 17 sind Vergleichsbeispiele, während die Beispiele 12 und 13 erfindungsgemäß sind. Man erkennt, dass die erfindungsgemäßen Polycarbonatzusammensetzungen der Beispiele 12 und 13 mit dem oxidierten säuremodifizierten Polyethylenwachs höhere Vicat-Temperaturen, höhere Wärmeformbeständigkeitstemperaturen (HDT) sowie verbesserte Kugeleindrucktemperaturen (KET) besitzen und gleichzeitig reduzierte Haft- und Gleitreibungen aufweisen als entsprechende Zusammensetzungen mit dem herkömmlichen Entformungsmittel PETS oder mit Vergleichswachsen, welche eine höhere Säurezahl aufweisen. Insbesondere für Smart Meter-Anwendungen sind Kugeleindrucktemperaturen von 134 bis 136°C, wie sie mit vergleichbaren Mengen PETS in den Polycarbonatzusammensetzungen erzielt werden, zu niedrig. Der durch den Einsatz der oxidierten säuremodifizierten Polyethylenwachse erzielte Effekt ist besonders auffällig in Beispiel 12, in dem der Gehalt an oxidiertem säuremodifiziertem Polyethylenwachs noch gegenüber dem PETS des Vergleichsbeispiels 11 verringert wurde.

Im Vergleich zu den Vergleichsbeispielen 14 und 17 erkennt man, dass die Senkung der Säurezahl des oxidierten säuremodifizierten Polyethylenwachses zu besseren thermischen Eigenschaften und gleichzeitig zu einer besseren Schmelzestabilität führt. Es konnten erfindungsgemäß Vicat-Temperaturen und KET erzielt werden, welche mind. ca. 2 °C oberhalb der Werte liegen, die bei Verwendung von höheren Säurenzahlen im Polyethylenwachs erhalten werden. Zudem resultiert bei den erfindungsgemäßen Zusammensetzungen gleichzeitig auch ein geringeres Delta MVR/IMVR20’ als bei der Verwendung des Vergleichswachs (I), wodurch belegt wird, dass eine bessere Schmelzestabilität vorliegt als wenn ein vergleichbares Wachs mit höherer Säurezahl verwendet wird.

Die erfindungsgemäßen Polycarbonatzusammensetzungen verfügen folglich über verbesserte thermische Eigenschaften und lassen sich gleichzeitig aufgrund der geringen Reibung besser verarbeiten.

## Patentansprüche

**1.** Polycarbonatzusammensetzung, enthaltend

A) Polycarbonat
B) oxidiertes säuremodifiziertes Polyethylenwachs und
D) einen anorganischen Füllstoff,

wobei das oxidierte säuremodifizierte Polyethylenwachs eine Säurezahl, bestimmt mittels JIS K0070, von < 10 mg KOH/g, eine Kristallinität von größer 60% und kleiner 90%, eine Schmelztemperatur zwischen 90 und 130°C und ein Viskositätsmittel der Molmasse, bestimmt mittels Viskosimetrie, zwischen 1500 g/mol und 5000 g/mol aufweist.

**2.** Zusammensetzung nach Anspruch 1, **dadurch gekennzeichnet, dass** die Zusammensetzung 20,0 bis 99,8 Gew.-% Polycarbonat enthält.

**3.** Zusammensetzung nach Anspruch 1 oder 2, **dadurch gekennzeichnet, dass** die Zusammensetzung 0,05 bis 10,0 Gew.-% oxidiertes säuremodifiziertes Polyethylenwachs enthält.

**4.** Zusammensetzung nach einem der vorhergehenden Ansprüche, **dadurch gekennzeichnet, dass** die Zusammensetzung 0,2 bis 0,5 Gew.-% oxidiertes säuremodifiziertes Polyethylenwachs enthält.

**5.** Zusammensetzung nach einem der vorhergehenden Ansprüche, **dadurch gekennzeichnet, dass** die Zusammensetzung 0,04 bis 4,0 Gew.-%, weiter bevorzugt 0,045 bis 3,8 Gew.-%, besonders bevorzugt 0,05 bis 3,6 Gew.-% Additive, ausgewählt aus der Gruppe, bestehend aus Thermostabilisatoren, Entformungsmitteln und UV-Stabilisatoren, enthält.

**6.** Zusammensetzung nach einem der vorhergehenden Ansprüche, **dadurch gekennzeichnet, dass** die Zusammensetzung Flammschutzmittel und/oder Farbmittel enthält.

7. Zusammensetzung nach einem der vorhergehenden Ansprüche, **dadurch gekennzeichnet, dass** der anorganische Füllstoff eine Glasfaser ist.

8. Zusammensetzung nach einem der vorhergehenden Ansprüche, **dadurch gekennzeichnet, dass** die Zusammensetzung 0,002 bis 0,2 Gew.-% Thermostabilisator, 0,01 Gew.-% bis 1,00 Gew.-% UV-Stabilisator und von 0,05 Gew.-% bis 2,00 Gew.-% Entformungsmittel enthält.

9. Zusammensetzung nach einem der vorhergehenden Ansprüche, **dadurch gekennzeichnet, dass** der Oxidationsindex des oxidierten säuremodifizierten Polyethylenwachses größer 8 ist.

10. Zusammensetzung nach einem der vorhergehenden Ansprüche, **dadurch gekennzeichnet, dass** das oxidierte säuremodifizierte Polyethylenwachs eine Schmelzeviskosität, bestimmt nach ISO 11443, zwischen 70 mPa·s und 800 mPa·s aufweist.

11. Zusammensetzung nach Anspruch 1, **dadurch gekennzeichnet, dass** sie aus

A) 46,0 bis 99,8 Gew.-% Polycarbonat,
B) 0,05 bis 10 Gew.-%, ganz besonders bevorzugt 0,15 bis 4,0 Gew.-% oxidiertem säuremodifiziertem Polyethylenwachs,
C1) 0,04 bis 4,0 Gew.-%, ganz besonders bevorzugt 0,05 bis 3,6 Gew.-% Additiven, ausgewählt aus der Gruppe der Thermostabilisatoren, Entformungsmittel und/oder UV-Stabilisatoren,
C2) optional weiteren Additiven, ausgewählt aus der Gruppe der Flammschutzmittel, Farbmittel, Antistatika und/oder Schlagzähmodifikatoren und
D) 5,0 bis 30,0 Gew.-% anorganischen Füllstoffen

besteht.

12. Formteile, hergestellt aus einer Zusammensetzung nach einem der Ansprüche 1 bis 11.

13. Verwendung von oxidiertem säuremodifiziertem Polyethylenwachs, wobei das oxidierte säuremodifizierte Polyethylenwachs eine Säurezahl, bestimmt mittels JIS K0070, von < 10 mg KOH/g, eine Kristallinität von größer 60% und kleiner 90%, eine Schmelztemperatur zwischen 90 und 130°C und ein Viskositätsmittel der Molmasse, bestimmt mittels Viskosimetrie, zwischen 1500 g/mol und 5000 g/mol aufweist, zur Senkung der Gleit- und Haftreibungskoeffizienten und/oder Verbesserung der Kugeleindrucktemperatur von mit mindestens einem anorganischen Füllstoff gefüllten Polycarbonatzusammensetzungen.

## Claims

1. Polycarbonate composition comprising

A) polycarbonate
B) oxidized acid-modified polyethylene wax and
D) an inorganic filler,

wherein the oxidized acid-modified polyethylene wax has an acid number determined according to JIS K0070 of < 10 mg KOH/g, a crystallinity of greater than 60% and less than 90%, a melting point between 90°C and 130°C and a viscosity average of molar mass determined by viscometry between 1500 g/mol and 5000 g/mol.

2. Composition according to Claim 1, **characterized in that** the composition comprises 20.0 to 99.8 wt% of polycarbonate.

3. Composition according to Claim 1 or 2, **characterized in that** the composition comprises 0.05 to 10.0 wt% of oxidized acid-modified polyethylene wax.

4. Composition according to any of the preceding claims, **characterized in that** the composition comprises 0.2 to 0.5

wt% of oxidized acid-modified polyethylene wax.

5. Composition according to any of the preceding claims, **characterized in that** the composition comprises 0.04 to 4.0 wt%, more preferably 0.045 to 3.8 wt%, particularly preferably 0.05 to 3.6 wt% of additives selected from the group consisting of heat stabilizers, demoulding agents and UV stabilizers.

6. Composition according to any of the preceding claims, **characterized in that** the composition comprises flame retardants and/or colourants.

7. Composition according to any of the preceding claims, **characterized in that** the inorganic filler is a glass fibre.

8. Composition according to any of the preceding claims, **characterized in that** the composition comprises 0.002 to 0.2 wt% of heat stabilizer, 0.01 wt% to 1.00 wt% of UV stabilizer and 0.05 wt% to 2.00 wt% of demoulding agent.

9. Composition according to any of the preceding claims, **characterized in that** the oxidation index of the oxidized acid-modified polyethylene wax is greater than 8.

10. Composition according to any of the preceding claims, **characterized in that** the oxidized acid-modified polyethylene wax has a melt viscosity, determined as per ISO 11443, between 70 mPa·s and 800 mPa·s.

11. Composition according to Claim 1, **characterized in that** it consists of

A) 46.0 to 99.8 wt% of polycarbonate,
B) 0.05 to 10 wt%, very particularly preferably 0.15 to 4.0 wt%, of oxidized acid-modified polyethylene wax,
C1) 0.04 to 4.0 wt%, very particularly preferably 0.05 to 3.6 wt%, of additives selected from the group of heat stabilizers, demoulding agents and/or UV stabilizers,
C2) optionally further additives selected from the group of flame retardants, colourants, antistats and/or impact modifiers and
D) 5.0 to 30.0 wt% of inorganic fillers.

12. Moulding produced from a composition according to any of Claims 1 to 11.

13. Use of oxidized acid-modified polyethylene wax, wherein the oxidized acid-modified polyethylene wax has an acid number determined according to JIS K0070 of < 10 mg KOH/g, a crystallinity of greater than 60% and less than 90%, a melting point between 90°C and 130°C and a viscosity average of molar mass determined by viscometry between 1500 g/mol and 5000 g/mol for reducing the coefficients of dynamic and static friction and/or improving the ball indentation temperature of polycarbonate compositions filled with at least one inorganic filler.

## Revendications

1. Composition de polycarbonate, contenant

A) un polycarbonate
B) une cire de polyéthylène oxydée modifié par acide et
D) une charge inorganique,

la cire de polyéthylène oxydée modifié par acide présentant un indice d'acide, déterminé au moyen de la norme JIS K0070, de < 10 mg de KOH/g, une cristallinité supérieure à 60 % et inférieure à 90 %, une température de fusion comprise entre 90 et 130 °C et une moyenne de viscosité de la masse molaire, déterminée par viscosimétrie, comprise entre 1 500 g/mole et 5 000 g/mole.

2. Composition selon la revendication 1, **caractérisée en ce que** la composition contient 20,0 à 99,8 % en poids de polycarbonate.

3. Composition selon la revendication 1 ou 2, **caractérisée en ce que** la composition contient 0,05 à 10,0 % en poids de cire de polyéthylène oxydée modifié par acide.

4. Composition selon l'une quelconque des revendications précédentes, **caractérisée en ce que** la composition contient 0,2 à 0,5 % en poids de cire de polyéthylène oxydée modifié par acide.

5. Composition selon l'une quelconque des revendications précédentes, **caractérisée en ce que** la composition contient 0,04 à 4,0 % en poids, plus préférablement 0,045 à 3,8 % en poids, particulièrement préférablement 0,05 à 3,6 % en poids d'additifs, choisis dans le groupe constitué par les stabilisants thermiques, les agents de démoulage et les stabilisants UV.

6. Composition selon l'une quelconque des revendications précédentes, **caractérisée en ce que** la composition contient des agents ignifugeants et/ou des colorants.

7. Composition selon l'une quelconque des revendications précédentes, **caractérisée en ce que** la charge inorganique est une fibre de verre.

8. Composition selon l'une quelconque des revendications précédentes, **caractérisée en ce que** la composition contient 0,002 à 0,2 % en poids de stabilisant thermique, 0,01 % en poids à 1,00 % en poids de stabilisant UV et de 0,05 % en poids à 2,00 % en poids d'agent de démoulage.

9. Composition selon l'une quelconque des revendications précédentes, **caractérisée en ce que** l'indice d'oxydation de la cire de polyéthylène oxydée modifié par acide est supérieur à 8.

10. Composition selon l'une quelconque des revendications précédentes, **caractérisée en ce que** la cire de polyéthylène oxydée modifié par acide présente une viscosité à l'état fondu, déterminée d'après la norme ISO 11443, comprise entre 70 mPa·s et 800 mPa·s.

11. Composition selon la revendication 1, **caractérisée en ce qu'**elle est constituée de

A) 46,0 à 99,8 % en poids de polycarbonate,
B) 0,05 à 10 % en poids, tout particulièrement préférablement 0,15 à 4,0 % en poids de cire de polyéthylène oxydée modifié par acide,
C1) 0,04 à 4,0 % en poids, tout particulièrement préférablement 0,05 à 3,6 % en poids d'additifs, choisis dans le groupe des stabilisants thermiques, des agents de démoulage et/ou des stabilisants UV,
C2) éventuellement d'autres additifs, choisis dans le groupe des agents ignifugeants, des colorants, des antistatiques et/ou des modificateurs de résilience et
D) 5,0 à 30,0 % en poids de charges inorganiques.

12. Pièces moulées, préparées à partir d'une composition selon l'une quelconque des revendications 1 à 11.

13. Utilisation d'une cire de polyéthylène oxydée modifié par acide, la cire de polyéthylène oxydée modifié par acide présentant un indice d'acide, déterminé au moyen de la norme JIS K0070, de < 10 mg de KOH/g, une cristallinité supérieure à 60 % et inférieure à 90 %, une température de fusion comprise entre 90 et 130 °C et une moyenne de viscosité de la masse molaire, déterminée par viscosimétrie, comprise entre 1 500 g/mole et 5 000 g/mole, pour l'abaissement des coefficients de glissement et de frottement statique et/ou l'amélioration de la température de pénétration de bille de compositions de polycarbonate chargées avec au moins une charge inorganique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1925638 A2
- EP 0262566 A1
- EP 0433723 A1
- EP 0517044 A
- WO 2006072344 A
- EP 1609818 A
- US 2999835 A
- US 3148172 A
- US 2991273 A
- US 3271367 A
- US 4982014 A
- US 2999846 A
- DE 1570703
- DE 2063050
- DE 2036052
- DE 2211956
- DE 3832396
- FR 1561518
- WO 9955772 A1
- EP 1377812 B1


### In der Beschreibung aufgeführte Nicht-Patentliteratur


- **MONOGRAPHIE H. SCHNELL.** Chemistry and Physics of Polycarbonates. Interscience Publishers, 1964, 28ff
- **D.G. LEGRAND ; J.T. BENDLER.** Handbook of Polycarbonate Science and Technology. Marcel Dekker, 2000, 72ff
- **JOHN MURPHY.** Additives for Plastics Handbook. Elsevier, 1999
- **HANS ZWEIFEL.** Plastics Additives Handbook. Hanser, 2001